# EUROPÄISCHE PATENTSCHRIFT

(11) **EP 2 888 302 B1**
(45) Veröffentlichungstag und Bekanntmachung des Hinweises auf die Patenterteilung: **09.10.2019**
(21) Anmeldenummer: 13756086.8
(22) Anmeldetag: 26.08.2013
(51) Int. Cl.: C08G 18/10, C08G 18/12, C08G 18/32, C09J 175/04

(54) **STRUKTURELLER POLYURETHANKLEBSTOFF**
STRUCTURAL POLYURETHANE ADHESIVE
COLLE EN POLYURÉTHANE STRUCTURELLE

(30) Priorität: 24.08.2012 EP 12181774
(43) Veröffentlichungstag der Anmeldung: 01.07.2015
(73) Patentinhaber: Sika Technology AG, 6340 Baar (CH)
(72) Erfinder: ROOCK, Wolfgang, 25482 Appen (DE); KELCH, Steffen, CH-8102 Oberengstringen (CH); ITTRICH, Florian, 25421 Pinneberg (DE); LINNENBRINK, Martin, 21641 Apensen (DE)
(74) Vertreter: Sika Patent Attorneys
(86) Internationale Anmeldenummer: PCT/EP2013/067628
(87) Internationale Veröffentlichungsnummer: WO 2014/029891

(56) Entgegenhaltungen:
- EP-A1- 0 504 681
- EP-A1- 1 690 880

## Beschreibung

### Technisches Gebiet

Die Erfindung betrifft das Gebiet der zweikomponentigen Polyurethanklebstoffe, insbesondere der strukturellen Polyurethanklebstoffe.

### Stand der Technik

Zweikomponentige Polyurethanzusammensetzungen auf der Basis von Polyolen und Polyisocyanaten werden seit langem als elastische Klebstoffe eingesetzt. Sie härten nach dem Mischen schnell aus und können deshalb bereits nach kurzer Zeit Kräfte aufnehmen und übertragen.

Strukturelle Klebstoffe, auch Konstruktionsklebstoffe oder Montageklebstoffe genannt, werden in der Fertigungsindustrie verwendet, um Bauteile so miteinander zu verkleben, dass der Klebeverbund Teil einer dauerhaft belastbaren Konstruktion ist. Solche Klebstoffe sind typischerweise zäh-elastisch und müssen hohe Ansprüche in Bezug auf Verarbeitbarkeit, Festigkeit und Anhaftungskräfte erfüllen.

Für viele geklebte Konstruktionen ist es wichtig, dass der Klebstoff über den ganzen Bereich seiner Gebrauchstemperatur, insbesondere im Temperaturbereich von etwa -35 °C bis etwa +85 °C, eine möglichst einheitliche Festigkeit aufweist, beispielsweise ein möglichst einheitliches Elastizitätsmodul, sodass das mechanische Verhalten des Klebeverbunds in geeigneter Weise in die Berechnung der Konstruktion einfliessen kann. Erwünscht sind insbesondere zähelastische Klebstoffe von hoher Festigkeit und hoher Dehnbarkeit mit einer wenig ausgeprägten Abhängigkeit der mechanischen Eigenschaften von der Temperatur. Diese Klebstoffe sollen gut verarbeitbar sein, auch in höheren Schichtdicken von bis zu 10 Millimetern und mehr verwendbar sein, sowohl bei Umgebungstemperatur als auch in einem durch Wärme beschleunigten Aushärtungsprozess störungsfrei zur Endfestigkeit gehärtet werden können und eine gute Anbindung an metallische und nichtmetallische Substrate zeigen.

Die EP 0 504 681 A1 betrifft ein Verfahren zum Verkleben von aus ungesättigtem Polyesterharz hergestellten Teilen mit Klebstoffen enthaltend ein Isocyanatprepolymer, eine isocyanatreaktive Komponente sowie einen Katalysator für die Umsetzung der beiden Komponenten. Dabei wird die Verklebung bei Raumtemperatur ohne vorherige Oberflächenbehandlung durchgeführt.

### Darstellung der Erfindung

Aufgabe der vorliegenden Erfindung ist es daher, einen Polyurethanklebstoff zur Verfügung zu stellen, welcher über eine hohe Festigkeit und eine hohe Dehnbarkeit bei einer nur schwach ausgeprägten Abhängigkeit der mechanischen Eigenschaften von der Temperatur verfügt und sich damit hervorragend als struktureller Klebstoff eignet.

Überraschenderweise wurde gefunden, dass ein Polyurethanklebstoff nach Anspruch 1 diese Aufgabe löst. Durch seine spezielle Zusammensetzung weist der Klebstoff eine gute Verarbeitbarkeit mit hoher Standfestigkeit nach dem Vermischen der Komponenten, eine gute Anfangshaftfestigkeit, eine rasche und störungfreie Aushärtung sowie eine sehr hohe Festigkeit m ausgehärteten Zustand auf, ohne dabei an Dehnbarkeit und Elastizität einzubüssen.

Die erzielte Kombination aus Festigkeit und Dehnung über einen Anwendungsbereich von -35 °C bis +85 °C ist verbunden mit einer erhöhten Schlagzähigkeit des ausgehärteten Materials. Ausserdem wurde festgestellt, dass man mit dem erfindungsgemässen Polyurethanklebstoff eine besonders gute Haftung auf metallischen Oberflächen und nicht metallischen Werkstoffen, insbesondere faserverstärkten Verbundwerkstoffen wie Glasfaser-verstärkten Kunststoffen und Kohlefaser-verstärkten Kunststoffen, erzielt.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Polyurethanklebstoff bestehend aus einer ersten und einer zweiten Komponente, wobei
- die erste Komponente
   a) mindestens ein Triol **A1** mit einem Molekulargewicht im Bereich von 1'000 bis 10'000 g/mol,
   b) mindestens ein Diol **A2** mit zwei primären Hydroxylgruppen und einem Molekulargewicht im Bereich von 60 bis 150 g/mol, und
   c) mindestens ein aliphatisches Polyamin **A3** mit einem Molekulargewicht im Bereich von 60 bis 200 g/mol enthält; und
- die zweite Komponente
   d) mindestens ein Polyisocyanat **B1** und
   e) mindestens ein Isocyanatgruppen aufweisendes Polyurethanpolymer **B2** enthält;
- wobei das Triol **A1,** das Diol **A2** und das Polyamin **A3** in einer solchen Menge vorhanden sind, dass
   f) das Verhältnis **V1** der Anzahl OH-Gruppen und NH₂-Gruppen von **(A2+A3)/A1** im Bereich von 4 bis 8 liegt, und
   g) das Verhältnis **V2** der Anzahl OH-Gruppen und NH₂-Gruppen von **A2/A3** im Bereich von 4 bis 20 liegt.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter dem "Molekulargewicht" versteht man bei Polymeren im vorliegenden Dokument stets das mittlere Molekulargewicht.

Als "primäre Hydroxylgruppe" wird eine OH-Gruppe bezeichnet, welche an ein C-Atom mit zwei Wasserstoffen gebunden ist.

Der Begriff "Phasenseparierung" beschreibt in diesem Dokument den Vorgang der Entmischung von hochgeordneten ("kristallinen") Bereichen, auch "Hartsegmente" genannt, und wenig geordneten ("amorphen") Bereichen, auch "Weichsegmente" genannt, bei der Aushärtung des Polyurethanklebstoffes. Als "Offenzeit" wird in diesem Dokument die Zeit bezeichnet, innerhalb welcher die zu verklebenden Teile gefügt sein müssen, nachdem die Komponenten vermischt sind.

Der Begriff "Festigkeit" bezeichnet im vorliegenden Dokument die Festigkeit des ausgehärteten Klebstoffs, wobei mit Festigkeit insbesondere die Zugfestigkeit und das Elastizitätsmodul (E-Modul) im Dehnungsbereich bis 10% gemeint sind.

Als "Raumtemperatur" wird im vorliegenden Dokument eine Temperatur von 23 °C bezeichnet.

Der Begriff "lagerstabil" bezeichnet die Eigenschaft einer Zusammensetzung, dass sie in einem geeigneten Gebinde während mehreren Wochen bis einige Monate bei Raumtemperatur aufbewahrt werden kann, ohne dass sie sich in ihren Anwendungs- oder Gebrauchseigenschaften durch die Lagerung wesentlich verändert.

Als Triol **A1** geeignet sind insbesondere Polyoxyalkylentriole, auch Polyethertriole genannt. Dies sind Polymerisationsprodukte von Ethylenoxid, 1,2-Propylenoxid, 1,2- oder 2,3-Butylenoxid oder Mischungen davon. Typischerweise sind sie polymerisiert mit Hilfe eines Startermoleküls mit drei aktiven Wasserstoffatomen wie beispielsweise Glycerin, 1,1,1-Trimethylolethan, 1,1,1-Trimethylolpropan oder Mischungen davon.

Bevorzugt als Triol **A1** sind Polyoxypropylentriole, Polyoxyethylentriole und Polyoxypropylen-Polyoxyethylen-Triole.

Besonders bevorzugt weist das Triol **A1** primäre Hydroxylgruppen auf. Dadurch ist der Polyurethanklebstoff weniger anfällig auf unerwünschte Reaktionen von Isocyanatgruppen mit gegebenenfalls vorhandenem Wasser, wodurch Blasen und eine unvollständige Aushärtung entstehen können.

Besonders bevorzugt als Triol **A1** sind sogenannte "EO-endcapped" (ethylene oxide-endcapped) Polyoxypropylentriole. Letztere sind spezielle Polyoxypropylenpolyoxyethylentriole, die beispielsweise dadurch erhalten werden, dass reine Polyoxypropylentriole nach Abschluss der Polypropoxylierung mit Ethylenoxid weiter alkoxyliert werden und dadurch primäre Hydroxylgruppen aufweisen.

Das Triol **A1** weist bevorzugt eine mittlere OH-Funktionalität im Bereich von 2.2 bis 3 auf. Mit solchen Triolen **A1** werden Klebstoffe mit guten mechanischen Eigenschaften erhalten.

Das Triol **A1** weist bevorzugt ein Molekulargewicht im Bereich von 3'000 bis 8'000 g/mol, besonders bevorzugt von 4'000 bis 6'000 g/mol, auf. Ein solches Triol ist einem Klebstoff mit guten mechanischen Eigenschaften besonders zuträglich.

Das Triol **A1** wird bevorzugt in einer Menge von 30 bis 70 Gewichts-%, bezogen auf das Gesamtgewicht der ersten Komponente, eingesetzt.

Als Diol **A2** geeignet sind insbesondere 1,2-Ethandiol, 1,3-Propandiol, 1,4-Butandiol, 1,5-Pentandiol, 1,6-Hexandiol, 1,3-Cyclohexandimethanol, 1,4-Cyclohexandimethanol und Diethylenglykol. Diese Diole weisen primäre, sterisch kaum gehinderte Hydroxylgruppen auf, welche mit Isocyanatgruppen besonders reaktiv sind.

Bevorzugt handelt es sich beim Diol **A2** um ein lineares Diol, insbesondere ausgewählt aus der Gruppe bestehend aus 1,3-Propandiol, 1,4-Butandiol und 1,5-Pentandiol. Diese Diole sind besonders gut handhabbar, da sie kaum hydrophil und bei Raumtemperatur flüssig sind und bei der Aushärtung des Klebstoffes eine hohe Festigkeit bei guter Dehnbarkeit über einen weiten Temperaturbereich begünstigen. Davon am meisten bevorzugt ist 1,4-Butandiol.

Als aliphatisches Polyamin **A3** geeignet sind Amine mit zwei oder drei aliphatischen Aminogruppen, insbesondere handelsübliche aliphatische, cycloaliphatische oder arylaliphatische primäre Diamine wie insbesondere Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, 1,4-Di-amino-2,2,6-trimethylcyclohexan (TMCDA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 1,8-Menthandiamin, Bis-(2-aminoethyl)ether, 3,6-Dioxaoctan-1,8-diamin, 4,7-Dioxadecan-1,10-diamin, 4,7-Di-oxadecan-2,9-diamin, 1,3- Bis-(aminomethyl)benzol und 1,4-Bis-(aminomethyl)benzol.

Diese Diamine ergeben eine gute Phasenseparierung im ausgehärteten Klebstoff, unter anderem auch dadurch begünstigt, dass sie frei sind von Polyoxypropylen-Ketten.

Besonders bevorzugt ist das Polyamin **A3** ausgewählt aus der Gruppe bestehend aus 1,5-Diamino-2-methylpentan, 2,2,4- und 2,4,4-Trimethylhexamethylendiamin, 1,8-Octandiamin, 1,10-Decandiamin, 1-Amino-3-aminomethyl-3,5,5-trimethylcyclohexan, 2- und 4-Methyl-1,3-diaminocyclohexan und Mischungen davon, 1,3-Bis-(aminomethyl)cyclohexan, 1,4-Bis-(aminomethyl)cyclohexan, 2,5(2,6)-Bis-(aminomethyl)-bicyclo[2.2.1]heptan, 3(4),8(9)-Bis-(aminomethyl)-tricyclo[5.2.1.0^{2,6}]decan, Bis-(2-aminoethyl)ether, 3,6-Dioxaoctan-1,8-diamin, 4,7-Dioxadecan-1,10-diamin, 4,7-Dioxadecan-2,9-diamin, 1,3- Bis-(aminomethyl)benzol und 1,4-Bis-(aminomethyl)benzol.

Diese Polyamine führen bei der Reaktion mit Isocyanaten zu Harnstoffgruppen, welche besonders gut phasenseparieren. Damit hergestellte Klebstoffe weisen besonders hohe Festigkeiten, insbesondere hohe Elastizitätsmoduli, und eine wenig ausgeprägte Abhängigkeit der mechanischen Eigenschaften von der Temperatur auf.

Davon bevorzugt sind 1,3-Bis-(aminomethyl)cyclohexan und 1,3-Bis-(aminomethyl)benzol, am meisten bevorzugt ist 1,3-Bis-(aminomethyl)benzol.Mit diesen Polyaminen entstehen ausgehärtete Klebstoffe mit ganz besonders hohen Festigkeiten.

Die Auswahl des Triols **A1,** des Diols **A2** und des Polyamins **A3** und deren Einsatz in bestimmten, sorgfältig aufeinander abgestimmten Verhältnissen verleiht dem Klebstoff gute Verarbeitungseigenschaften und eine ausgezeichnete Festigkeit, wobei amorphe und kristalline Bereiche sehr gut entmischt vorliegen, und eine nur schwach ausgeprägten Abhängigkeit der mechanischen Eigenschaften von der Temperatur.

Das Verhältnis **V1** der Anzahl OH-Gruppen und NH₂-Gruppen von **(A2+A3)/A1** liegt im Bereich von 4 bis 8. Oder anders formuliert beträgt das Verhältnis **V1** von (Summe aller OH-Gruppen der Diole **A2** + Summe aller NH₂-Gruppen der aliphatischen Polyamine **A3**) / (Summe aller OH-Gruppen der Triole **A1**) = 4 - 8.

Liegt das Verhältnis **V1** bei 4 - 8, zeigen solche Klebstoffe eine ganz besonders geringe Temperaturabhängigkeit der mechanischen Eigenschaften in der Kälte.

Das Verhältnis **V1** liegt bevorzugt im Bereich von 6 bis 8. Solche Klebstoffe zeigen eine geringe Temperaturabhängigkeit der mechanischen Eigenschaften in der Kälte bei gleichzeitig hohen Festigkeiten bei hohen Temperaturen wie zum Beispiel 85 °C.

Das Verhältnis **V2** der Anzahl OH-Gruppen und NH₂-Gruppen von **A2/A3** liegt im Bereich von 4 bis 20. Oder anders formuliert beträgt das Verhältnis **V2** von (Summe aller OH-Gruppen der Diole **A2**) / (Summe aller NH₂-Gruppen der aliphatischen Polyamine **A3**) = 4 - 20.

Das Verhältnis **V2** liegt bevorzugt bei 4 -15. Solche Klebstoffe zeigen eine gewisse Standfestigkeit bei einer langen Offenzeit.

Das Verhältnis **V2** liegt besonders bevorzugt bei 4 - 10. Solche Klebstoffe zeigen eine gute Standfestigkeit bei einer gut handhabbaren Offenzeit.

Das Verhältnis **V2** liegt bevorzugt bei 4.5 - 20. Solche Klebstoffe zeigen eine hohe Festigkeit bei hohen Temperaturen wie zum Beispiel 85 °C und eine gute Standfestigkeit bei einer kurzen Offenzeit.

Das Verhältnis **V2** liegt besonders bevorzugt bei 5 - 20. Solche Klebstoffe zeigen eine hohe Festigkeit bei hohen Temperaturen wie zum Beispiel 85 °C und eine gute Standfestigkeit bei einer gut handhabbaren Offenzeit.

Das Verhältnis **V2** liegt bevorzugt im Bereich von 4.5 bis 15, insbesondere im Bereich von 5 bis 10. Solche Klebstoffe zeigen eine gute Kombination aus hoher Festigkeit bei hohen Temperaturen, guter Standfestigkeit bei der Applikation und gut handhabbarer Offenzeit.

Als Polyisocyanat **B1** geeignet sind insbesondere monomere Di- oder Triisocyanate, sowie Oligomere, Polymere und Derivate von monomeren Di- oder Triisocyanaten, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-di-isocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.

Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methyl-ethyl)naphthalin, Dimer- und Trimerfettsäureisocyanate wie 3,6-Bis-(9-isocyanatononyl)-4,5-di-(1-heptenyl)cyclohexen (Dimeryldiisocyanat) und α,α,α',α',α",α"-Hexamethyl-1,3,5-mesitylentriisocyanat.

Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur® N 100 und N 3200 (von Bayer), Tolonate® HDB und HDB-LV (von Rhodia) und Duranate® 24A-100 (von Asahi Kasei); HDI-Isocyanurate, wie Desmodur® N 3300, N 3600 und N 3790 BA (alle von Bayer), Tolonate® HDT, HDT-LV und HDT-LV2 (von Rhodia), Duranate® TPA-100 und THA-100 (von Asahi Kasei) und Coronate® HX (von Nippon Polyurethane); HDI-Uretdione wie Desmodur® N 3400 (von Bayer); HDI-Iminooxadiazindione wie Desmodur® XP 2410 (von Bayer); HDI-Allophanate wie Desmodur® VP LS 2102 (von Bayer); IPDI-Isocyanurate, wie beispielsweise in Lösung als Desmodur® Z 4470 (von Bayer) oder in fester Form als Vestanat® T1890/ 100 (von Degussa); TDI-Oligomere wie Desmodur® IL (von Bayer); sowie gemischte Isocyanurate auf Basis TDI/HDI, zum Beispiel als Desmodur® HL (von Bayer). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur® CD, Desmodur® PF, Desmodur® PC (alle von Bayer) oder Isonate® M 143 (von Dow), sowie Gemische aus MDI und MDI-Homologen (polymeres MDI oder PMDI), erhältlich unter Handelsnamen wie Desmodur® VL, Desmodur® VL50, Desmodur® VL R10, Desmodur® VL R20, Desmodur® VH 20 N und Desmodur® VKS 20F (alle von Bayer), Isonate® M 309, Voranate® M 229 und Voranate® M 580 (alle von Dow) oder Lupranat® M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt als Polyisocyanat **B1** sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4'-, 2,4'- und 2,2'-Diphenylmethandiisocyanat und beliebige Gemische dieser Isomeren) solcher flüssiger Formen von MDI beträgt insbesondere 50 bis 95 Gewichts-%, insbesondere 60 bis 90 Gewichts-%.

Besonders bevorzugt als Polyisocyanat **B1** sind polymeres MDI und insbesondere bei Raumtemperatur flüssige MDI-Typen, welche Anteile von MDI-Carbodiimiden oder deren Addukten enthalten.

Mit diesen Polyisocyanaten **B1** werden besonders gute Verarbeitungseigenschaften und besonders hohe Festigkeiten erhalten.

Das Polyurethanpolymer **B2** weist bevorzugt 50 - 95 Massenprozente, insbesondere 70 - 90 Massenprozente, Polyoxyalkyleneinheiten, besonders bevorzugt Polyoxyethylen- und/oder Polyoxypropyleneinheiten, insbesondere Polyoxypropyleneinheiten, auf. Ein solches Polyurethanpolymer weist eine tiefe Viskosität auf und ermöglicht gute Dehnbarkeiten.

Das Polyurethanpolymer **B2** weist bevorzugt ein mittleres Molekulargewicht von 1'000 bis 20'000 g/mol, besonders bevorzugt von 2'000 bis 10'000 g/mol, auf.

Das Polyurethanpolymer **B2** weist bevorzugt eine mittlere NCO-Funktionalität im Bereich von 1.7 bis 3, insbesondere von 1.8 bis 2.5, auf. Ein solches Polyurethanpolymer ermöglicht gute Verarbeitungseigenschaften und gute mechanische Eingenschaften im ausgehärteten Zustand.

Besonders bevorzugt weist das Polyurethanpolymer **B2** eine mittlere NCO-Funktionalität im Bereich von 2.05 bis 2.5 auf. Ein solches Polyurethanpolymer ermöglicht eine gute Dehnbarkeit bei hoher Festigkeit.

Das Polyurethanpolymer **B2** weist bevorzugt einen Gehalt an freien Isocyanatgruppen von 1 bis 10 Gewichts-%, besonders bevorzugt von 1 bis 5 Gewichts-%, auf.

Die Urethangruppen und die freien Isocyanatgruppen des Polyurethanpolymers **B2** sind bevorzugt abgeleitet von 4,4'-Diphenylmethandiisocyanat.Damit werden bei der Aushärtung des Klebstoffes besonders gute Hartsegmente und somit besonders hohe Festigkeiten erhalten.

Ein geeignetes Isocyanatgruppen aufweisendes Polyurethanpolymer **B2** ist erhältlich aus der Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO / OH-Verhältnis" wird das Verhältnis der Anzahl der eingesetzten Isocyanatgruppen zu der Anzahl der eingesetzten Hydroxylgruppen verstanden.

Als Polyol zur Herstellung eines Polyurethanpolymers **B2** sind insbesondere die folgenden handelsüblichen Polyole oder Mischungen davon geeignet:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxyethylen- und Polyoxypropylendi- und -triole.
   Ganz besonders geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.
   Speziell geeignet sind sogenannte Ethylenoxid-terminierte ("EO-endcapped", ethylene oxide-endcapped) Polyoxypropylenpolyole.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
   Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro® (früher Hycar®) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Als Polyol zur Herstellung eines Polyurethanpolymers **B2** bevorzugt sind Polyoxyalkylenpolyole, Polyesterpolyole, Polycarbonatpolyole und Polyacrylatpolyole. Besonders bevorzugt sind Polyoxyalkylenpolyole, insbesondere Polyoxypropylenpolyole und Polyoxyethylen-Polyoxypropylen-Mischpolyole.

Das Polyol zur Herstellung eines Polyurethanpolymers **B2** weist bevorzugt ein Molekulargewicht von 500 - 20'000 g/mol, insbesondere von 1'000 bis 8'000 g/mol, auf.

Das Polyol zur Herstellung eines Polyurethanpolymers **B2** ist bevorzugt ein Diol oder eine Mischung aus mindestens einem Diol und mindestens einem Triol, insbesondere eine Mischung aus mindestens einem Diol und mindestens einem Triol.

Als Polyisocyanat zur Herstellung eines Polyurethanpolymers **B2** sind insbesondere die folgenden handelsüblichen Polyisocyanate oder Mischungen davon geeignet:
2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-di-isocyanatodiphenyl (TODI), 1,3,5-Tris-(isocyanatomethyl)benzol, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI) und m- und p-Tetramethyl-1,3- und -1,4-xylylendiisocyanat (m- und p-TMXDI). Bevorzugt sind MDI, TDI, IPDI und HDI. Besonders bevorzugt ist MDI. Am meisten bevorzugt ist 4,4'-Diphenylmethandiisocyanat. Mit diesem MDI-Isomeren werden bei der Aushärtung mit den Diolen **A2** und Polyaminen **A3** besonders gute Hartsegmente und somit besonders hohe Festigkeiten erhalten.

Vorzugsweise handelt es sich beim Polyisocyanat **B1** und dem zur Herstellung des Polyurethanprepolymers **B2** verwendeten Polyisocyanat um einen unterschiedlichen Typ Polyisocyanat.

Besonders bevorzugt handelt es sich beim Polyisocyanat **B1** um ein bei Raumtemperatur flüssiges MDI und beim zur Herstellung des Polyurethanpolymers **B2** verwendeten Polyisocyanat um 4,4'-Diphenylmethandiisocyanat, welches bei Raumtemperatur typischerweise fest ist. Damit ist die zweite Komponente bei Raumtemperatur flüssig, was eine einfache Verarbeitung ermöglicht, und es werden besonders gute mechanische Eingenschaften ermöglicht. Eine definierte Mischung aus Polyisocyanat **B1** und Polyurethanpolymer **B2** lässt sich dadurch erreichen, dass das Polyurethanpolymer **B2** vorgängig separat hergestellt wird, bevor es mit dem Polyisocyanat **B1** vermischt wird.

Bevorzugt erfolgt die Herstellung das Polyurethanpolymers **B2** somit nicht in Anwesenheit des Polyisocyanates **B1.**

Vorzugsweise beträgt das Gewichtsverhältnis zwischen dem Polyisocyanat **B1** und dem Polyurethanpolymer **B2** 0.25 bis 4, bevorzugt 0.25 bis 2, besonders bevorzugt 0.3 bis 1.5, und insbesondere 0.4 bis 1.0. Eine solche zweite Komponente ermöglicht Klebstoffe mit guter Verarbeitbarkeit, hoher Festigkeit und hoher Dehnung.

Der Polyurethanklebstoff kann als Bestandteil der ersten Komponente zusätzlich weitere mit Isocyanatgruppen reaktionsfähige Substanzen enthalten. Insbesondere kann die erste Komponente mindestens ein Polyol und/oder mindestens einen niedrigmolekularen zwei- oder mehrwertigen Alkohol enthalten, welche zur Herstellung des Polyurethanpolymers **B2** genannt wurden.

Weiterhin kann der Polyurethanklebstoff Katalysatoren enthalten, die die Reaktion von Hydroxylgruppen mit Isocyanatgruppen beschleunigen, insbesondere Zinn-, Zink- und Wismut-organische Metallkatalysatoren, zum Beispiel Dibutylzinndilaurat, oder tertiäre Amine, Amidine oder Guanidine, zum Beispiel 1,4-Diazabicyclo[2.2.2]octan (DABCO) oder 1,8-Diazabicyclo[5.4.0]-undec-7-en (DBU).

Der Polyurethanklebstoff kann neben den genannten weitere in zweikomponentigen Polyurethanzusammensetzungen üblicherweise eingesetzte Bestandteile enthalten, insbesondere die Folgenden:
- Weichmacher;
- Lösemittel;
- anorganische und organische Füllstoffe;
- Fasern, beispielsweise aus Polyethylen;
- Pigmente;
- Rheologie-Modifizierer, insbesondere Verdickungsmittel oder Thixotropiermittel;
- Trocknungsmittel;
- Haftvermittler;
- Stabilisatoren gegen Oxidation, Wärme, Licht- und UV-Strahlung;
- flammhemmende Substanzen;
- oberflächenaktive Substanzen, insbesondere Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, beim Einsatz von weiteren Bestandteilen des Polyurethanklebstoffs darauf zu achten, dass diese die Lagerstabilität der jeweiligen Komponente nicht stark beeinträchtigen. Falls solche Substanzen zusammen mit Isocyanaten gelagert werden sollen, bedeutet dies insbesondere, dass sie kein oder höchstens Spuren von Wasser enthalten sollten. Es kann sinnvoll sein, gewisse Bestandteile vor dem Einmischen chemisch oder physikalisch zu trocknen.

Die Komponenten des Polyurethanklebstoffs werden vorteilhaft derart formuliert, dass das Mischungsverhältnis der Volumen zwischen der ersten und der zweiten Komponente im Bereich von 1:3 bis 3:1, insbesondere 1:2 bis 2:1, liegt. Bevorzugt beträgt dieses Verhältnis ungefähr 1:1.

Das Mischungsverhältnis wird vorzugsweise so eingestellt, dass im vermischten Polyurethanklebstoff das Verhältnis zwischen der Anzahl Isocyanatgruppen und der Anzahl gegenüber Isocyanaten reaktiven Gruppen, insbesondere die Summe aus OH- und NH₂-Gruppen, vor der Aushärtung ungefähr im Bereich von 1.2 bis 1, bevorzugt 1.1 bis 1, liegt.

Die Herstellung der beiden Komponenten erfolgt getrennt voneinander und, zumindest für die zweite Komponente,typischerweise unter Ausschluss von Feuchtigkeit. Die Komponenten werden typischerweise jeweils in einem eigenen Gebinde gelagert. Die weiteren Bestandteile des Polyurethanklebstoffs können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube.

Die beiden Komponenten werden vor der Anwendung getrennt voneinander gelagert und erst bei oder unmittelbar vor der Anwendung miteinander vermischt. Die Komponenten sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils eine der beiden Komponenten des Polyurethanklebstoffs enthält. Bevorzugte derartige Packungen sind einerseits side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind. Über den Vortrieb dieser Kolben können die Komponenten aus der Kartusche ausgepresst werden. Die den Kolben entgegengesetzten Seiten der Rohre sind, gegebenenfalls über einen Adapter, derart modifiziert, dass die Kammeröffnungen im Bereich der Öffnung über eine Trennwand miteinander direkt verbunden sind. Vorteilhaft ist im Bereich der Austrittsöffnung der Kammern ein Gewinde angebracht, so dass ein Statikmischer oder ein dynamischer Mischer dicht angebracht werden kann. Derartige Packungen werden insbesondere für Kleinanwendungen bevorzugt, insbesondere für Füllmengen bis 1 Liter.

Für Anwendungen in grösseren Mengen, insbesondere für Anwendungen in der industriellen Fertigung, werden die beiden Komponenten vorteilhaft in Fässer oder Hobbocks abgefüllt und gelagert. Bei der Anwendung werden die Komponenten über Förderpumpen ausgepresst und über Leitungen einer Mischapparatur, wie sie üblicherweise für Zweikomponentenklebstoffe in der industriellen Fertigung verwendet wird, zudosiert.

Das Mischen erfolgt typischerweise über Statikmischer oder mit Hilfe von dynamischen Mischern. Beim Mischen ist darauf zu achten, dass die zwei Komponenten möglichst homogen vermischt werden. Werden die zwei Komponenten schlecht gemischt, treten lokale Abweichungen vom vorteilhaften Mischungsverhältnis auf, was sich in einer Verschlechterung der mechanischen Eigenschaften auswirken kann. Um die Mischqualität visuell zu kontrollieren kann es vorteilhaft sein, wenn die beiden Komponenten zwei unterschiedliche Farben aufweisen. Eine gute Vermischung liegt dann vor, wenn der vermischte Klebstoff eine homogene Mischfarbe aufweist, ohne sichtbare Streifen oder Schlieren.

Beim Kontakt der ersten Komponente mit Isocyanatgruppen der zweiten Komponente beginnt die Aushärtung durch chemische Reaktion. Dabei reagieren die Aminogruppen des Polyamins **A3** und die Hydroxylgruppen des Triols **A1** und des Diols **A2** und gegebenenfalls vorhandene weitere gegenüber Isocyanatgruppen reaktive Substanzen mit vorhandenen Isocyanatgruppen. Überschüssige Isocyanatgruppen reagieren mit vorhandener Feuchtigkeit. Als Resultat dieser Reaktionen härtet der Polyurethanklebstoff zu einem festen Material aus. Dieser Vorgang wird auch als Vernetzung bezeichnet.

Ein weiterer Aspekt der vorliegenden Erfindung betrifft ein Verfahren zum Verkleben von einem ersten Substrat mit einem zweiten Substrat, welches die Schritte umfasst:
- Mischen der beiden vorgängig beschriebenen Komponenten,
- Applizieren des vermischten Polyurethanklebstoffs auf mindestens eine der zu verklebenden Substratoberflächen,
- Fügen der zu verklebenden Substrate innerhalb der Offenzeit,
- Aushärten des Polyurethanklebstoffs.

Dabei können die beiden Substrate aus dem gleichen oder unterschiedlichen Materialien bestehen.

In diesem Verfahren sind geeignete Substrate insbesondere
- Glas, Glaskeramik;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Backstein, Ziegel, Gips und Natursteine wie Granit oder Marmor.

In diesem Verfahren ist eines oder beide Substrate bevorzugt ein Metall oder eine Keramik oder ein Glasfaser-verstärkter Kunststoff oder ein Kohlefaser-verstärkter Kunststoff.

Die Substrate können bei Bedarf vor dem Applizieren des Klebstoffs vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Aus diesem beschriebenen Verfahren zum Verkleben entsteht ein Artikel, bei welchem der Klebstoff zwei Substrate kraftschlüssig miteinander verbindet. Dieser Artikel ist insbesondere ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Zug oder ein Schiff, sowie ein Flugzeug oder ein Helikopter; oder ein Anbauteil eines solchen Artikels.

Ein weiterer Gegenstand der Erfindung ist ein Artikel erhalten aus dem vorgehend beschriebenen Verfahren zum Verkleben.

Der beschriebene Polyurethanklebstoff weist sehr gute Eigenschaften als struktureller Klebstoff auf.

Als struktureller Klebstoff wird hierbei ein Klebstoff bezeichnet, welcher im ausgehärteten Zustand einen Teil der tragenden Struktur der verklebten Bauteile bildet. Der strukturelle Klebstoff ist somit ein wichtiges Bindeglied der Konstruktion, innerhalb welcher er zwei Bauteile bzw. Substrate verbindet. An seine mechanischen Eigenschaften werden dementsprechend hohe Anforderungen gestellt.

Bevorzugt weist der ausgehärtete strukturelle Klebstoff bei Raumtemperatur eine Zugfestigkeit von mehr als 8 MPa, insbesondere mehr als 10 MPa, auf. Bevorzugt weist der ausgehärtete strukturelle Klebstoff bei Raumtemperatur eine Bruchdehnung von mehr als 100 %, insbesondere mehr als 150 %, auf. Bevorzugt weist der ausgehärtete strukturelle Klebstoff bei Raumtemperatur ein Elastizitätsmodul im Bereich von mindestens 30 MPa, besonders bevorzugt mindestens 35 MPa, insbesondere mindestens 40 MPa, auf, und bei 85 °C ein Elastizitätsmodul von mindestens 20 MPa, bevorzugt mindesten 25 MPa, auf. Bevorzugt weichen dabei die Werte für das Elastizitätsmodul bei -35 °C nicht allzusehr von den Werten bei 23 °C ab. Besonders bevorzugt beträgt das Verhältnis zwischen dem Elastizitätsmodul bei -35 °C und demjenigen bei 23 °C höchstens 5, insbesondere höchstens 4.

Bevorzugt weist der ausgehärtete strukturelle Klebstoff bei Raumtemperatur eine Zugscherfestigkeit von mindestens 8 MPa, insbesondere mindestens 9 MPa, auf, und bei 85 °C eine Zugscherfestigkeit von mindestens 4 MPa auf. Dabei sind diese genannten mechanischen Werte gemessen wie in den nachfolgenden Beispielen beschrieben.

Eine weitere wichtige Eigenschaft eines strukturellen Klebstoffs ist seine gute Verarbeitbarkeit. Dabei sollen die beiden Komponenten einzeln und beim Vermischen eine niedrige Viskosität aufweisen, sodass sie gut förderbar und mischbar sind, dann aber sehr schnell eine solche Viskosität aufbauen, dass unmittelbar ein strukturviskoses, standfestes Material erhalten wird, sodass Schichtdicken von bis zu 10 Millimetern und mehr aufgetragen werden können.

Mit dem beschriebenen Polyurethanklebstoff sind diese Anforderungen besonders gut erfüllbar.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### 1. verwendete Substanzen:

| | |
|---|---|
| Polyisocyanat | modifiziertes Diphenylmethandiisocyanat enthaltend MDI-Carbodiimide, bei Raumemperatur flüssig, NCO-Gehalt 28 Gewichts-% (Desmodur® CD von Bayer) |
| Triol | EO-endcapped Polyoxypropylentriol, OH-Zahl 34.7 mg KOH/g (Voranol® CP 4755 von Dow) |
| MXDA | 1,3-Bis-(aminomethyl)benzol |
| Polyether-Triamin | Polyoxypropylen-Triamin, Amin-Zahl 346.3 mg KOH/g (Jeffamine® T-403 von Huntsman) |
| DABCO | 1,4-Diazabicyclo[2.2.2]octan, 33.0 Gewichts-% in Dipropylenglykol (DABCO 33 LV® von Air Products) |
| Kieselsäure | pyrogene Kieselsäure, hydrophob modifiziert |

Das **Polymer-1** wurde hergestellt, indem 1300 g Polyoxypropylen-Diol (Acclaim® 4200 N von Bayer; OH-Zahl 28.5 mg KOH/g), 2600 g Polyoxypropylen-polyoxyethylen-Triol (Caradol® MD34-02 von Shell; OH-Zahl 35.0 mg KOH/g), 600 g 4,4'-Methylendiphenyldiisocyanat (Desmodur® 44 MC L von Bayer) und 500 g Diisodecylphthalat nach bekanntem Verfahren bei 80 °C zu einem NCOterminierten Polyurethanpolymer mit einem Gehalt an freien IsocyanatGruppen von 2.1 Gewichts-% umgesetzt wurden.

### 2. Herstellung von Polyurethanklebstoffen

Für jeden Klebstoff wurden die in den Tabellen 1 und 2 angegebenen Inhaltsstoffe in den angegebenen Mengen (in Gewichtsteilen) der ersten Komponente ("Komponente-1") mittels eines Vakuumdissolvers unter Feuchtigkeitsausschluss zu einer homogenen Paste verarbeitet und aufbewahrt. Ebenso wurden die in den Tabellen 1 und 2 angegebenen Inhaltsstoffe der zweiten Komponente ("Komponente-2") verarbeitet und aufbewahrt. Anschliessend wurden die beiden Komponenten mittels einem SpeedMixer® (DAC 150 FV, Hauschild) während 30 Sekunden zu einer homogenen Paste verarbeitet und diese unverzüglich folgendermassen geprüft:
Die **Anfangsviskosität** wurde mit einem Kegel-Platte Rheometer (basierend auf DIN 53019, Spindel gemäss DIN Z3, gemessen bei 25°C, Drehzahl 225 U/min, über einen Zeitraum von 60 Sekunden, Anton Paar Physica Rheolab MC1) 30 Sekunden nach Abschluss der Mischzeit gemessen. Werte von ≥ 100 Pa.s sind geeignet für die Verwendung als Klebstoff, da solche Massen als Raupen auf einem Substrat appliziert werden können ohne abzulaufen oder abzutropfen. Massen mit Werten von ≤ 100 Pa.s, insbesondere ≤ 40 Pa.s, sind ungeeignet für die Verwendung als Klebstoff, da sie nach der Applikation auf dem Substrat zerfliessen.

Zur Bestimmung der mechanischen Eigenschaften wurde der Klebstoff in Hantelform gemäss ISO 527, Teil 2, 1B, gebracht und während 24 h bei 25°C und anschliessend während 3h bei 80°C gelagert bzw. ausgehärtet.

Nach einer Konditionierungszeit von 24h bei der in den Tabellen 1 und 2 angegebenen Temperatur (- 35 °C bzw. 23 °C bzw. 85 °C) wurden das Elastizitätsmodul im Bereich von 0.05 bis 0.25 % Dehnung ("**E-Modul")** die **Zugfestigkeit** und die **Bruchdehnung** der so hergestellten Probekörper gemäss ISO 527 auf einer Zwick Z020 Zugprüfmaschine bei der jeweils angegebenen Temperatur und einer Prüfgeschwindigkeit 50 mm/ min gemessen. Als Mass für die Temperaturunabhängigkeit des E-Moduls ist jeweils noch das Verhältnis zwischen dem Elastizitätsmodul bei -35 °C und demjenigen bei 23 °C angegen, in den Tabellen 1 und 2 als **"E-Modul** (-35°C) / (23°C)" bezeichnet.

Zur Messung der **Zugscherfestigkeit** wurde der Klebstoff 1 Minute nach Abschluss der Mischzeit zwischen zwei mit Isopropanol entfetteten KTL-lackierten Stahlblechen in einer Schichtdicke von 2,0 mm und auf einer überlappenden Klebefläche 15 x 45 mm aufgebracht und für 24 h bei 25°C und anschliessend 3h bei 80°C ausgehärtet. Nach einer Konditionierungszeit von 24h bei den in den Tabellen 1 und 2 angegebenen Temperaturen wurde die Zugscherfestigkeit bei der jeweils angegebenen Temperatur nach DIN EN 1465 bestimmt. Die Resultate sind in den Tabellen 1 und 2 angegeben.

Bei den Klebstoffen ***Z-1*** und ***Z-2*** handelt es sich um erfindungsgemässe Beispiele, bei den Klebstoffen ***Ref.1*** bis ***Ref.8*** handelt es sich um Vergleichsbeispiele.

Der Klebstoff ***Z-1*** wurde 1 Minute nach Abschluss der Mischzeit der beiden Komponenten auf ein zuvor mit Isopropanol entfettetes Glasfaser-verstärktes Kunststoffplättchen aufgetragen und mit einem zweiten gleichen Plättchen bedeckt, sodass eine überlappende Klebefläche von 15 x 45 mm bei einer Schichtdicke von 2 mm entstand, für 24 h bei 23°C und anschliessend 3h bei 80°C ausgehärtet und nach einer Konditionierungszeit von 24h bei 23 °C die Zugscherfestigkeit wie bereits beschrieben bestimmt, wobei ein kohäsives Bruchbild resultierte.

Ebenso wurden mit dem Klebstoff ***Z-1*** zwei Kohlefaser-verstärkte Kunststoffplättchen verklebt und die Zugscherfestigkeit bei 23 °C bestimmt, wobei ein kohäsives Bruchbild resultierte.

Das Vergleichsbeispiel ***Ref.6*** war unmittelbar nach dem Vermischen der beiden Komponenten sehr dünnflüssig ohne Standfestigkeit. Es war deshalb als Klebstoff ungeeignet, weshalb keine Prüfungen der mechanischen Eigenschaften durchgeführt wurden.

Das Vergleichsbeispiel ***Ref.7*** härtete so schnell aus, dass kein Film für die mechanischen Prüfungen hergestellt werden konnte.

| **Zusammensetzungen** | ***Z-1*** | ***Z-2*** | ***Ref.1*** | ***Ref.2*** | ***Ref.3*** |
|---|---|---|---|---|---|
| ***Komponente-1*** | | | | | |
| Triol | 52.2 | 47.9 | 52.2 | 52.2 | 44.3 |
| 1,4-Butandiol | 7.4 | 9.8 | 7.4 | - | 15.3 |
| 1,2-Ethandiol | - | - | - | 5.9 | - |
| MXDA | 2.0 | 1.0 | - | - | 2.0 |
| Polyether-Triamin | - | - | 2.0 | 3.0 | 0.2 |
| DABCO | 0.2 | 0.2 | 0.2 | 0.2 | - |
| calciniertes Kaolin | 33.3 | 36.0 | 33.3 | 33.8 | 33.3 |
| Molekularsieb | 4.9 | 5.3 | 4.9 | 4.9 | 4.9 |

| ***Komponente-2*** | | | | | |
|---|---|---|---|---|---|
| Polyisocyanat | 33.2 | 38.7 | 31.2 | 35.9 | 58.1 |
| Polymer-1 | 47.5 | 55.4 | 44.6 | 51.4 | 83.1 |
| Kieselsäure | 3.4 | 3.9 | 3.2 | 3.6 | 5.9 |
| Anfangsviskosität [Pa.s] | ≥100 | ≥100 | ≥100 | ≥100 | ≥100 |
| **-35 °C:** Zugfestigkeit [MPa] | 34 | 33 | 37 | 32 | 34 |
| Bruchdehnung [%] | 240 | 140 | 220 | 190 | 134 |
| E-Modul [MPa] | 198 | 285 | 125 | 125 | 309 |
| Zugscherfestigkeit [MPa] | 13.6 | 13.5 | 13.7 | 13.1 | 12.9 |
| **23 °C:** Zugfestigkeit [MPa] | 13 | 14 | 12 | 11 | 15 |
| Bruchdehnung [%] | 188 | 177 | 184 | 223 | 191 |
| E-Modul [MPa] | 56 | 59 | 34 | 28 | 91 |
| Zugscherfestigkeit [MPa] | 9.6 | 9.3 | 8.2 | 9.0 | 6.8 |
| **85 °C:** Zugfestigkeit [MPa] | 7 | 8 | 7 | 5 | 8 |
| Bruchdehnung [%] | 105 | 109 | 101 | 108 | 139 |
| E-Modul [MPa] | 29 | 35 | 23 | 16 | 37 |
| Zugscherfestigkeit [MPa] | 4.4 | 4.6 | 3.8 | 4.1 | 4.6 |
| **E-Modul** (-35°C) / (23°C) | 3.5 | 4.8 | 3.7 | 4.5 | 3.4 |
| Verhältnis **V1 = (A2+A3)/A1** | 6.0 | 7.8 | - | - | 13.5 |
| Verhältnis **V2 = A2/A3** | 5.6 | 14.8 | - | - | 11.6 |

| | | | | | |
|---|---|---|---|---|---|
| Tabelle 1: Zusammensetzung und Eigenschaften von ***Z-1*** und ***Z-2*** und ***Ref.1*** bis ***Ref.3*** (Mengenangaben in Gewichtsteilen) | | | | | |

**Tabelle 2: Zusammensetzung und Eigenschaften von Ref.4 bis Ref.8 (Mengenangaben in Gewichtsteilen)**

| **Zusammensetzungen** | ***Ref.4*** | ***Ref.5*** | ***Ref.6*** | ***Ref. 7*** | ***Ref.8*** |
|---|---|---|---|---|---|
| ***Komponente-1*** | | | | | |
| Triol | 55.2 | 52.2 | 54.2 | 52.2 | 52.2 |
| 1,4-Butandiol | 4.4 | 7.4 | 7.4 | 4.9 | |
| 2-Ethyl-1,3-hexandiol | - | - | - | - | 7.4 |
| MXDA | 2.0 | 2.0 | - | 4.0 | 2.0 |
| DABCO | 0.2 | 0.2 | 0.2 | 0.2 | 0.2 |
| calciniertes Kaolin | 33.3 | 33.3 | 33.3 | 33.5 | 33.3 |
| Molekularsieb | 4.9 | 4.9 | 4.9 | 4.9 | 4.9 |

| ***Komponente-2*** | | | | | |
|---|---|---|---|---|---|
| Polyisocyanat | 23.7 | 141.1 | 29.2 | 29.6 | 24.5 |
| Polymer-1 | 33.9 | - | 41.8 | 42.4 | 35.0 |
| Kieselsäure | 2.4 | 5.9 | 3.0 | 3.0 | 2.5 |
| Anfangsviskosität [Pa.s] | ≥100 | ≥100 | 20 | ≥100 | ≥100 |
| **-35 °C:** Zugfestigkeit [MPa] | 36 | 37 | n.b.¹ | n.b.² | 40 |
| Bruchdehnung [%] | 226 | 37 | n.b.¹ | n.b.² | 199 |
| E-Modul [MPa] | 102 | 782 | n.b.¹ | n.b.² | 355 |
| Zugscherfestigkeit [MPa] | 13.7 | 12.9 | n.b.¹ | 5.8 | 13.3 |
| **23 °C:** Zugfestigkeit [MPa] | 14 | 19 | n.b.¹ | n.b.² | 10 |
| Bruchdehnung [%] | 193 | 110 | n.b.¹ | n.b.² | 194 |
| E-Modul [MPa] | 30 | 166 | n.b.¹ | n.b.² | 14 |
| Zugscherfestigkeit [MPa] | 7.4 | 10.0 | n.b.¹ | 4.8 | 6.8 |
| **85 °C:** Zugfestigkeit [MPa] | 6 | 11 | n.b.¹ | n.b.² | 5 |
| Bruchdehnung [%] | 87 | 79 | n.b.¹ | n.b.² | 81 |
| E-Modul [MPa] | 17 | 107 | n.b.¹ | n.b.² | 11 |
| Zugscherfestigkeit [MPa] | 2.9 | 4.3 | n.b.¹ | 1.0 | 2.3 |
| **E-Modul** (-35°C) / (23°C) | 3.4 | 4.7 | - | - | 25.4 |
| Verhältnis **V1** = **(A2+A3)/A1** | 3.7 | 6.0 | - | 5.2 | - |
| Verhältnis **V2** = **A2/A3** | 3.3 | 5.6 | - | 1.9 | - |

| | | | | | |
|---|---|---|---|---|---|
| n.b.¹ steht für "nicht bestimmt", der Klebstoff war zu flüssig n.b.² steht für "nicht bestimmt", der Klebstoff war zu reaktiv | | | | | |

## Patentansprüche

1. Polyurethanklebstoff bestehend aus einer ersten und einer zweiten Komponente, wobei
- die erste Komponente
a) mindestens ein Triol **A1** mit einem Molekulargewicht im Bereich von 1'000 bis 10'000 g/mol,
b) mindestens ein Diol **A2** mit zwei primären Hydroxylgruppen und einem Molekulargewicht im Bereich von 60 bis 150 g/mol, und
c) mindestens ein aliphatisches Polyamin **A3** mit einem Molekulargewicht im Bereich von 60 bis 200 g/mol enthält; und
- die zweite Komponente
d) mindestens ein Polyisocyanat **B1** und
e) mindestens ein Isocyanatgruppen aufweisendes Polyurethanpolymer **B2** enthält;
- wobei das Triol **A1,** das Diol **A2** und das Polyamin **A3** in einer solchen Menge vorhanden sind, dass
f) das Verhältnis **V1** der Anzahl OH-Gruppen und NH₂-Gruppen von **(A2+A3)/A1** im Bereich von 4 bis 8 liegt, und
g) das Verhältnis **V2** der Anzahl OH-Gruppen und NH₂-Gruppen von **A2/A3** im Bereich von 4 bis 20 liegt.

2. Polyurethanklebstoff gemäss Anspruch 1, **dadurch gekennzeichnet, dass** das Triol ein Polyethertriol ist.

3. Polyurethanklebstoff gemäss Anspruch 1 oder 2, **dadurch gekennzeichnet, dass** das Triol primäre Hydroxylgruppen aufweist.

4. Polyurethanklebstoff gemäss einem der Ansprüche 1 bis 3, **dadurch gekennzeichnet, dass** das Diol ausgewählt ist aus der Gruppe bestehend aus 1,3-Propandiol, 1,4-Butandiol und 1,5-Pentandiol.

5. Polyurethanklebstoff gemäss einem der Ansprüche 1 bis 4, **dadurch gekennzeichnet, dass** das Polyamin ausgewählt ist aus der Gruppe bestehend aus 1,5-Diamino-2-methylpentan, 2,2,4- und 2,4,4-Trimethylhexamethylendiamin, 1,8-Octandiamin, 1,10-Decandiamin, 1,12-Dodecandiamin, 1-Amino-3-aminomethyl-3,5,5-trimethylcyclohexan, 2- und 4-Methyl-1,3-diaminocyclohexan und Mischungen davon, 1,3-Bis-(aminomethyl)cyclohexan, 1,4-Bis-(aminomethyl)cyclohexan, 2,5(2,6)-Bis-(aminomethyl)-bi-cyclo[2.2.1]heptan, 3(4),8(9)-Bis-(aminomethyl)-tricyclo[5.2.1.0^{2,6}]decan, Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 1,3- Bis-(aminomethyl)benzol und 1,4-Bis-(aminomethyl)benzol.

6. Polyurethanklebstoff gemäss einem der Ansprüche 1 bis 5, **dadurch gekennzeichnet, dass** das Verhältnis **V1** im Bereich von 5 bis 9 liegt.

7. Polyurethanklebstoff gemäss einem der Ansprüche 1 bis 6, **dadurch gekennzeichnet, dass** das Verhältnis **V2** im Bereich von 4.5 bis 15 liegt.

8. Polyurethanklebstoff gemäss einem der Ansprüche 1 bis 7, **dadurch gekennzeichnet, dass** das Polyisocyanat **B1** eine bei Raumtemperatur flüssige Form von 4,4'-, 2,4'- und 2,2'-Diphenylmethandiisocyanat und beliebige Gemische dieser Isomeren (MDI) in Form von polymerem MDI oder MDI mit Anteilen von Oligomeren oder Derivaten ist.

9. Polyurethanklebstoff gemäss einem der Ansprüche 1 bis 8, **dadurch gekennzeichnet, dass** das Polyurethanpolymer **B2** 50 - 95 Massenprozente Polyoxyalkyleneinheiten aufweist.

10. Polyurethanklebstoff gemäss einem der Ansprüche 1 bis 9, **dadurch gekennzeichnet, dass** die Urethangruppen und die freien Isocyanatgruppen des Polyurethanpolymers **B2** abgeleitet sind von 4,4'-Diphenylmethandiisocyanat.

11. Polyurethanklebstoff gemäss einem der Ansprüche 1 bis 10, **dadurch gekennzeichnet, dass** die Herstellung das Polyurethanpolymers **B2** nicht in Anwesenheit des Polyisocyanates **B1** erfolgt.

12. Verfahren zum Verkleben von einem ersten Substrat mit einem zweiten Substrat, welches die Schritte umfasst:
- Mischen der beiden Komponenten eines Polyurethanklebstoffs gemäss einem der Ansprüche 1 bis 11,
- Applizieren des vermischten Polyurethanklebstoffs auf mindestens eine der zu verklebenden Substratoberflächen,
- Fügen der zu verklebenden Substrate innerhalb der Offenzeit,
- Aushärten des Polyurethanklebstoffs.

13. Verfahren gemäss Anspruch 12, **dadurch gekennzeichnet, dass** eines oder beide Substrate ein Metall oder eine Keramik oder ein Glasfaser-verstärkter Kunststoff oder ein Kohlefaser-verstärkter Kunststoff ist.

14. Artikel erhalten aus einem Verfahren zum Verkleben gemäss einem der Ansprüche 12 oder 13.

## Claims

1. Polyurethane adhesive composed of a first and a second component, wherein
- the first component contains
a) at least one triol **A1** having a molecular weight in the range of 1,000 to 10,000 g/mol,
b) at least one diol **A2** having two primary hydroxyl groups and a molecular weight in the range of 60 to 150 g/mol, and
c) at least one aliphatic polyamine **A3** having a molecular weight in the range of 60 to 200 g/mol; and
- the second component contains
d) at least one polyisocyanate **B1** and
e) at least one polyurethane polymer **B2** having isocyanate groups;
- wherein the triol **A1,** the diol **A2** and the polyamine **A3** are present in such an amount that
f) the ratio **V1** of the number of OH groups and NH₂ groups of **(A2+A3)/A1** is in the range of 4 to 8, and
g) the ratio **V2** of the number of OH groups and NH₂ groups of **A2/A3** is in the range of 4 to 20.

2. Polyurethane adhesive according to Claim 1, **characterized in that** the triol is a polyether triol.

3. Polyurethane adhesive according to Claim 1 or 2, **characterized in that** the triol has primary hydroxyl groups.

4. Polyurethane adhesive according to any one of Claims 1 to 3, **characterized in that** the diol is selected from the group consisting of 1,3-propanediol, 1,4-butanediol and 1,5-pentanediol.

5. Polyurethane adhesive according to any one of Claims 1 to 4, **characterized in that** the polyamine is selected from the group consisting of 1,5-diamino-2-methylpentane, 2,2,4- and 2,4,4-trimethylhexamethylenediamine, 1,8-octanediamine, 1,10-decanediamine, 1,12-dodecanediamine, 1-amino-3-aminomethyl-3,5,5-trimethylcyclohexane, 2- and 4-methyl-1,3-diaminocyclohexane and mixtures thereof, 1,3-bis(aminomethyl)cyclohexane, 1,4-bis(aminomethyl)cyclohexane, 2,5(2,6)-bis(aminomethyl)bicyclo[2.2.1]heptane, 3(4),8(9)-bis(aminomethyl)tricyclo[5.2.1.0^{2,6}]decane, bis(2-aminoethyl) ether, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 1,3-bis(aminomethyl)benzene and 1,4-bis(aminomethyl)benzene.

6. Polyurethane adhesive according to any one of Claims 1 to 5, **characterized in that** the ratio **V1** is in the range of 5 to 9.

7. Polyurethane adhesive according to any one of Claims 1 to 6, **characterized in that** the ratio **V2** is in the range of 4.5 to 15.

8. Polyurethane adhesive according to any one of Claims 1 to 7, **characterized in that** the polyisocyanate **B1** is a form of 4,4'-, 2,4'- and 2,2'-diphenylmethane diisocyanate that is liquid at room temperature and arbitrary mixtures of these isomers (MDI) in the form of polymeric MDI or MDI having fractions of oligomers or derivatives.

9. Polyurethane adhesive according to any one of Claims 1 to 8, **characterized in that** the polyurethane polymer **B2** has 50-95 percent by mass of polyoxyalkylene units.

10. Polyurethane adhesive according to any one of Claims 1 to 9, **characterized in that** the urethane groups and the free isocyanate groups of the polyurethane polymer **B2** are derived from 4,4'-diphenylmethane diisocyanate.

11. Polyurethane adhesive according to any one of Claims 1 to 10, **characterized in that** the polyurethane polymer **B2** is not prepared in the presence of the polyisocyanate **B1.**

12. Method for bonding a first substrate to a second substrate, comprising the following steps:
- mixing of the two components of a polyurethane adhesive according to any one of Claims 1 to 11,
- applying the mixed polyurethane adhesive to at least one of the substrate surfaces to be bonded,
- joining the substrates to be bonded within the open time,
- curing the polyurethane adhesive.

13. Method according to Claim 12, **characterized in that** one substrate is, or both substrates are, a metal or a ceramic or a glass fiber-reinforced plastic material or a carbon fiber-reinforced plastic material.

14. Article obtained from a method for bonding according to any one of Claims 12 or 13.

## Revendications

1. Adhésif à base de polyuréthane constitué par un premier et un deuxième composant,
- le premier composant contenant
a) au moins un triol A1 présentant un poids moléculaire dans la plage de 1000 à 10.000 g/mole,
b) au moins un diol A2 présentant deux groupes hydroxyle primaires et un poids moléculaire dans la plage de 60 à 150 g/mole, et
c) au moins une polyamine aliphatique A3 présentant un poids moléculaire dans la plage de 60 à 200 g/mole ; et
- le deuxième composant contenant
d) au moins un polyisocyanate B1 et
e) au moins un polymère de polyuréthane B2 présentant des groupes isocyanate ;
- le triol A1, le diol A2 et la polyamine A3 étant présents en une quantité telle que
f) le rapport V1 du nombre de groupes OH et de groupes NH₂ de (A2 + A3)/A1 se situe dans la plage de 4 à 8, et
g) le rapport V2 du nombre de groupes OH et de groupes NH₂ de A2/A3 se situe dans la plage de 4 à 20.

2. Adhésif à base de polyuréthane selon la revendication 1, **caractérisé en ce que** le triol est un polyéthertriol.

3. Adhésif à base de polyuréthane selon la revendication 1 ou 2, **caractérisé en ce que** le triol présente des groupes hydroxyle primaires.

4. Adhésif à base de polyuréthane selon l'une quelconque des revendications 1 à 3, **caractérisé en ce que** le diol est choisi dans le groupe constitué par le 1,3-propanediol, le 1,4-butanediol et le 1,5-pentanediol.

5. Adhésif à base de polyuréthane selon l'une quelconque des revendications 1 à 4, **caractérisé en ce que** la polyamine est choisie dans le groupe constitué par le 1,5-diamino-2-méthylpentane, la 2,2,4-triméthylhexaméthylènediamine et la 2,4,4-triméthylhexaméthylènediamine, la 1,8-octanediamine, la 1,10-décanediamine, la 1,12-dodécanediamine, le 1-amino-3-aminométhyl-3,5,5-triméthylcyclohexane, le 2-méthyl-1,3-diaminocyclohexane et le 4-méthyl-1,3-diaminocyclohexane et des mélanges de ceux-ci, le 1,3-bis-(aminométhyl)cyclohexane, le 1,4-bis-(aminométhyl)cyclohexane, le 2,5(2,6)-bis-(aminométhyl)-bicyclo[2.2.1]heptane, le 3(4),8(9)-bis-(aminométhyl)-tricyclo[5.2.1.0^{2,6}] décane, le bis-(2-aminoéthyl)éther, la 3,6-dioxaoctane-1,8-diamine, la 4,7-dioxadécane-1,10-diamine, la 4,7-dioxadécane-2,9-diamine, la 4,9-dioxadodécane-1,12-diamine, la 5,8-dioxadodécane-3,10-diamine, le 1,3-bis-(aminométhyl)benzène et le 1,4-bis-(aminométhyl)benzène.

6. Adhésif à base de polyuréthane selon l'une quelconque des revendications 1 à 5, **caractérisé en ce que** le rapport V1 se situe dans la plage de 5 à 9.

7. Adhésif à base de polyuréthane selon l'une quelconque des revendications 1 à 6, **caractérisé en ce que** le rapport V2 se situe dans la plage de 4,5 à 15.

8. Adhésif à base de polyuréthane selon l'une quelconque des revendications 1 à 7, **caractérisé en ce que** le polyisocyanate B1 est une forme, liquide à température ambiante, de diisocyanate de 4,4'-diphénylméthane, de diisocyanate de 2,4'-diphénylméthane et de diisocyanate de 2,2'-diphénylméthane et de mélanges quelconques de ces isomères (MDI) sous forme de MDI polymère ou de MDI présentant des proportions d'oligomères ou de dérivés.

9. Adhésif à base de polyuréthane selon l'une quelconque des revendications 1 à 8, **caractérisé en ce que** le polymère de polyuréthane B2 présente 50 à 95 pour cent en masse d'unités polyoxyalkylène.

10. Adhésif à base de polyuréthane selon l'une quelconque des revendications 1 à 9, **caractérisé en ce que** les groupes uréthane et les groupes isocyanate libres du polymère de polyuréthane B2 sont dérivés du diisocyanate de 4,4'-diphénylméthane.

11. Adhésif à base de polyuréthane selon l'une quelconque des revendications 1 à 10, **caractérisé en ce que** la préparation du polymère de polyuréthane B2 n'est pas effectuée en présence du polyisocyanate B1.

12. Procédé pour le collage d'un premier substrat à un deuxième substrat, qui comprend les étapes de :
- mélange des deux composants d'un adhésif à base de polyuréthane selon l'une quelconque des revendications 1 à 11,
- application de l'adhésif à base de polyuréthane mélangé sur au moins l'une des surfaces de substrat à coller,
- assemblage des substrats à coller en un temps ouvert,
- durcissement de l'adhésif à base de polyuréthane.

13. Procédé selon la revendication 12, **caractérisé en ce qu'**un ou les deux substrats est/sont un métal ou une céramique ou un matériau synthétique renforcé par des fibres de verre ou un matériau synthétique renforcé par des fibres de carbone.

14. Article obtenu selon un procédé pour le collage selon l'une quelconque des revendications 12 et 13.
